# FASCICULE DE BREVET EUROPEEN

(11) **EP 1 918 168 B1**
(45) Date de publication et mention de la délivrance du brevet: **30.06.2010**
(21) Numéro de dépôt: 07118123.4
(22) Date de dépôt: 09.10.2007
(51) Int. Cl.: B60T 11/26

(54) **Réservoir de liquide hydraulique d'embrayage et de freinage à chambre**
Behälter für hydraulische Kupplungs- und Bremsflüssigkeit mit Innenkammer
Hydraulic fluid reservoir for clutch and brake with compartment

(30) Priorité: 02.11.2006 FR 0609690
(43) Date de publication de la demande: 07.05.2008
(73) Titulaire: ROBERT BOSCH GMBH, 70442 Stuttgart (DE)
(72) Inventeur: Beauré-d'Augères, Olivier, 08019 Barcelone (ES); Lenczner, Sylvain, 75020 Paris (FR); L'Aot, Jean-Michel, 93240 Stains (FR)
(74) Mandataire: Hurwic, Aleksander Wiktor

(56) Documents cités:
- FR-A1- 2 667 036
- JP-A- 11 208 447
- JP-A- 2006 035 877

## Description

La présente invention se rapporte à un réservoir de liquide hydraulique d'embrayage et de freinage à chambre. De tels réservoirs sont décrits dans FR 2 667 036, JP 11 208447 et JP 2006 035877. Dans un tel réservoir, il existe au moins une chambre interne placée à l'intérieur d'une enceinte extérieure. Cette chambre interne possède sa propre sortie de liquide du réservoir. L'enceinte sert à contenir un liquide hydraulique de freinage. La chambre sert à contenir un liquide hydraulique d'embrayage de même nature que le liquide de frein, l'inverse serait également envisageable. Normalement la chambre communique avec l'enceinte. L'invention est plus particulièrement destinée au domaine de l'automobile mais pourrait s'appliquer dans d'autres domaines.

Ce type de chambre est généralement réalisé par moulage de manière solidaire de l'enceinte extérieure. Cette réalisation par moulage entraîne généralement un placement de la chambre imposé par le moulage et une perte d'espace dans le réservoir importante. L'invention a pour but de palier aux inconvénients d'un tel réservoir.

Les réservoirs de liquide hydraulique d'embrayage et de freinage, à chambre incorporée, connus à ce jour sont prévus pour éviter qu'en cas de fuite de l'enceinte extérieure le système de freinage ne soit plus alimenté et ne fonctionne plus, ou réciproquement que l'embrayage ne puisse plus être actionné. Pour éviter cela, une chambre est prévue pour alimenter le système d'embrayage indépendamment du système d'alimentation du système de freinage. Pour des raisons de commodité d'utilisation, la chambre et l'enceinte sont réunis un même objet, l'une étant réalisée dans l'autre. L'enceinte extérieure d'un tel réservoir sert de réservoir d'alimentation du système de freinage. La chambre interne sert de réservoir pour le système d'embrayage.

Une chambre interne classique se présente sous la forme d'un parallélépipède. Une telle chambre a une ouverture sur toute sa surface supérieure. Cette ouverture sert de moyen de remplissage par débordement du liquide dans l'enceinte. Quand le liquide contenu dans l'enceinte extérieure est à un niveau supérieur de celui de l'ouverture de la chambre, le liquide déborde par cette ouverture et remplit la chambre.

Si le niveau de liquide dans l'enceinte extérieure vient à baisser en dessous de l'ouverture, par exemple à cause d'une fuite, le niveau de liquide à l'intérieur de la chambre n'est plus influencé par celui de l'enceinte extérieure. Cette séparation assure un niveau minimum de liquide pour le système d'embrayage évitant en cas de fuite de l'enceinte extérieure son dysfonctionnement. Réciproquement une fuite dans le système d'embrayage ne pénalise pas les freins.

Les réservoirs connus à ce jour sont réalisés par le moulage de deux pièces assemblées l'une avec l'autre pour former l'enceinte extérieure du réservoir. La première pièce formant l'enceinte extérieure sera par la suite appelée fond de l'enceinte extérieure. La deuxième pièce formant l'enceinte extérieure sera appelée couvercle de l'enceinte extérieure. Cette appellation se justifie car, en utilisation, le réservoir contient un liquide soumis aux lois de la gravité. Cette enceinte extérieure est prévue pour recevoir le liquide servant à alimenter le système de freinage.

Pour des réservoirs comportant une ou plusieurs chambres internes le moulage doit prendre en compte la présence de telles chambres. Dans ce type de moulage, la chambre est moulée dans le fond de l'enceinte extérieure. Un moulage de la chambre dans le couvercle serait beaucoup plus compliqué à réaliser et beaucoup plus cher.

Le fond de la chambre correspond généralement au fond de la partie inférieure de l'enceinte extérieure. La correspondance des fonds de la chambre et de l'enceinte rend l'ensemble plus simple à réaliser, il suffit de construire une cloison verticale dans le fond de l'enceinte. Ceci contraint cependant une affectation importante de liquide hydraulique au système d'embrayage. Quand le fond de la chambre ne correspond pas au fond de l'enceinte extérieure, tout l'espace sous la chambre sert de cale. Cette cale n'est présente, dans ce cas, que pour faciliter le moulage et éviter un moule trop complexe et trop cher. Cette cale neutralise un volume qui pourrait autrement être utilisé pour contenir du liquide hydraulique destiné au freinage.

Ce système de moulage impose donc que la chambre prenne dans le réservoir une place importante. De plus le moulage impose que la chambre soit dans la partie inférieure de l'enceinte extérieure uniquement.

Un plan de joint formé par la soudure des deux parties de l'enceinte extérieure limite par ailleurs la hauteur de la chambre.

Le système connu impose donc une liberté limité de placement de la chambre dans l'enceinte. De plus ce système impose de placer la ou les chambres dans la partie inférieure de l'enceinte extérieure et peut entraîner une importante perte de place dans le réservoir.

Créer des moules permettant de placer le fond de la chambre au dessus du fond de l'enceinte extérieure sans la perte de l'espace entre le fond de la chambre et le fond de l'enceinte extérieure serait possible mais beaucoup plus compliqué. Le prix d'un tel moule en serait d'autant plus élevé. Faire un moulage par le bas poserait des problèmes de difficulté et de prix similaires.

L'invention prévoit de régler ces problèmes en fabriquant la chambre interne et l'enceinte extérieure de manière séparée. Pour cela l'invention prévoit un réservoir de liquide hydraulique d'embrayage et de freinage comportant une enceinte extérieure. L'enceinte extérieure comporte un fond et un couvercle ultérieurement soudés entre eux. Le plan de joint représenté par cette soudure n'est plus, dans l'invention, limité par la hauteur que l'on doit donner à la chambre. Ce plan de joint peut être situé n'importe où dans le réservoir.

A l'intérieur de cette enceinte extérieure est montée une chambre interne. La chambre interne sert de réservoir au liquide alimentant le système d'embrayage. Cette chambre est fabriquée de façon indépendante de l'enceinte extérieure. La chambre est ouverte dans l'enceinte. L'ouverture dans la chambre est faite sur le dessus de la chambre afin de permettre au liquide contenu dans l'enceinte de pénétrer dans la chambre par débordement. Une sortie de liquide est présente dans la chambre. Cette sortie de liquide se présente sous la forme d'un embout circulaire positionné sur un coté de la chambre. Cet embout est creux et permet au liquide à l'intérieur de la chambre d'en sortir pour alimenter le système d'embrayage.

La chambre est maintenue dans une position fixe dans l'enceinte. La position fixe de la chambre dans l'enceinte peut être obtenue en emboîtant l'embout de sortie de liquide de la chambre dans un embout de sortie de l'enceinte. L'embout de sortie de l'enceinte est moulé avec la partie de l'enceinte sur lequel il est monté. Il peut aussi bien être monté sur la partie inférieure de l'enceinte, le fond, que sur la partie supérieure, le couvercle.

Le moulage à part de la chambre permet de pouvoir la placer librement dans le réservoir. La fabrication à part de la chambre permet de lui donner une forme et une taille quelconque. L'espace situé sous la chambre n'est plus occupé inutilement par la chambre ou par une cale trop volumineuse. La liberté de taille de la chambre combinée avec son placement libre dans l'enceinte du réservoir évite la perte d'espace dans le réservoir.

L'invention a donc pour objet un réservoir de liquide hydraulique d'embrayage et de freinage comportant une enceinte extérieure comportant un fond et un couvercle soudés entre eux, une chambre contenue dans l'enceinte, cette chambre étant ouverte dans l'enceinte, l'ouverture étant faite sur le dessus de la chambre, la chambre ayant une position fixe dans l'enceinte, une sortie de liquide de cette chambre, **caractérisé en ce que** la chambre est fabriquée à part de l'enceinte et est emboîtée dans l'enceinte par un embout de sortie de la chambre qui pénètre dans un embout de sortie de l'enceinte de manière étanche.

Selon une variante avantageuse de l'invention, la chambre est fixée au couvercle de l'enceinte extérieure.

L'invention sera mieux comprise à la lecture de la description qui suit et à l'examen des figures qui l'accompagnent. Celles-ci ne sont présentes qu'à titre indicatif et nullement limitatif de l'invention. Ces figures montrent :
Figure 1 : une vue en coupe transversale d'un réservoir de liquide hydraulique d'embrayage et de freinage à chambre selon l'invention.
Figures 2 et 3 : des vues en coupe transversale d'une sortie de liquide d'embrayage d'un réservoir de liquide hydraulique d'embrayage et de freinage à chambre selon l'invention.

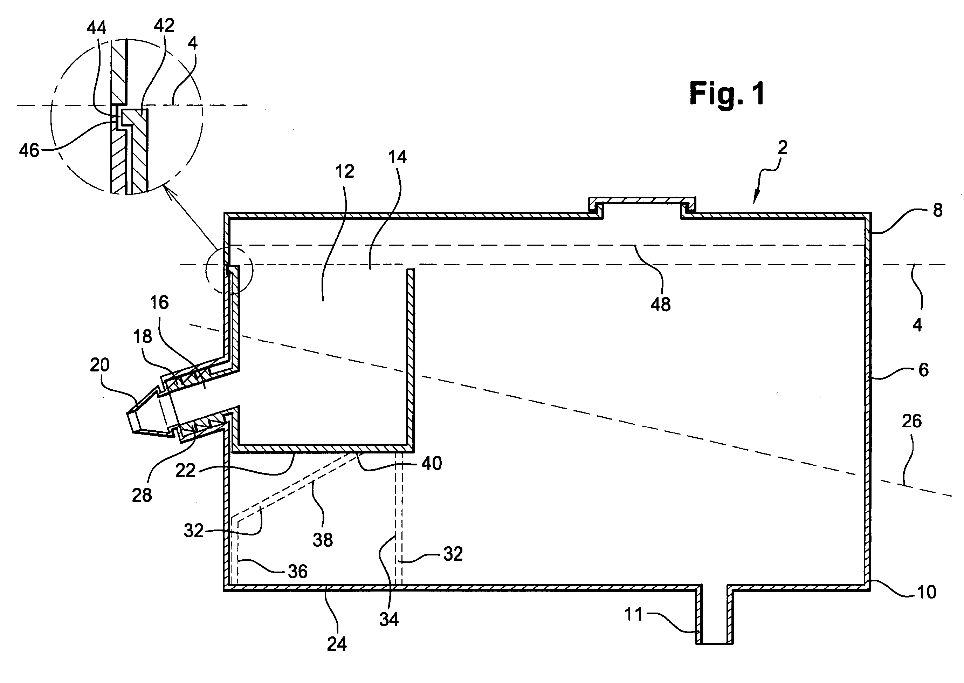

La figure 1 représente une vue en coupe transversale d'un réservoir 2 de liquide hydraulique d'embrayage et de freinage à chambre selon l'invention. Le réservoir 2 comporte deux parties 8 et 10 soudées entre elles. Les deux parties 8 et 10 sont soudées entre elles selon un plan de joint 4. Ces deux parties 8 et 10 représentent l'enceinte extérieure 6 du réservoir. La partie supérieure 8 est le couvercle du réservoir 2. La partie inférieure 10 est le fond du réservoir 2 dans lequel se trouve l'embout 11 qui sert à alimenter le circuit de freinage. Le soudage peut se faire par ultrasons, chauffage, ou tout autre moyen permettant de fixer de manière étanche les deux parties 8 et 10. L'enceinte extérieure 6 contient le liquide prévu pour alimenter un système de freinage. A cet effet l'enceinte 6 comporte un orifice 11 d'alimentation du système de freinage.

Une chambre 12 est placée dans l'enceinte 6 du réservoir 2. Cette chambre 12 comporte une ouverture 14 sur sa partie supérieure. Cette ouverture 14 à pour effet de permettre au liquide contenu dans l'enceinte extérieure 6 de remplir la chambre 12 par débordement. Quand le niveau de liquide de l'enceinte extérieure 6 ne permet plus de remplir la chambre 12 par débordement, les liquides de la chambre 12 et de l'enceinte extérieure 6 ne communiquent plus.

La chambre 12 a une position fixe dans l'enceinte.

Une sortie 16 de liquide est pratiquée dans la chambre 12 permettant d'alimenter en liquide le système d'embrayage. Cette sortie 16 de liquide de la chambre 12 se présente sous la forme d'un embout 18 protubérant, de préférence de forme circulaire et creux. Cet embout 18 fait communiquer l'intérieur et l'extérieur de la chambre 12.

La chambre 12 est fabriquée séparément de l'enceinte extérieure 6. La chambre 12 est importée dans l'enceinte extérieure 6 lors de l'assemblage du réservoir 2. Elle est emboîtée dans l'enceinte extérieure 6 par l'embout 18 de sortie de liquide de la chambre 12. L'embout 18 de sortie de liquide de la chambre 12 pénètre dans un embout 20 de sortie de liquide de l'enceinte extérieure 6. Le moulage de l'enceinte extérieure 6 prévoit à cet effet un embout 20 dans lequel on fixe l'embout 18 de sortie de liquide de la chambre 12. L'embout 18 de sortie de liquide de la chambre 12 et l'embout 20 de sortie de liquide de l'enceinte extérieure 6 ont une forme complémentaire circulaire, l'un et l'autre pourraient toutefois être de forme polygonale permettant une orientation fixe de la chambre 12 dans l'enceinte 6.

De préférence, l'emboîtement serré de l'embout 18 de sortie de liquide de la chambre 12 dans l'embout 20 de sortie de liquide de l'enceinte extérieure 6 permet de maintenir la chambre 12 dans une position fixe dans l'enceinte. De plus la présence de liquide dans l'enceinte extérieure 6 permet de diminuer les efforts qu'imposent le poids de la chambre 12 et son contenu à la fixation par emboîtement.

La réalisation séparée de la chambre 12 permet d'éviter une perte d'espace dans le réservoir. En effet on donne à la chambre 12 la taille désirée au moment de sa fabrication. Le fond 22 de la chambre 12 peut alors se situer au dessus du fond 24 du fond 10 de l'enceinte extérieure 6 sans que l'espace les séparant ne soit occupé ni par la chambre 12 ni par une cale volumineuse. Cet espace peut être utilement employé pour contenir du liquide hydraulique de freinage.

La fabrication séparée de la chambre 12 permet donc de résoudre le problème de perte d'espace dans le réservoir et ce sans la création d'un moule de partie inférieure d'enceinte 6 extérieure trop compliqué et trop cher.

De plus l'embout 20 de l'enceinte extérieure 6 destiné à recevoir l'embout 18 de sortie de liquide de la chambre 12 peut être positionné aussi bien sur la partie inférieure 10 que sur la partie supérieure 8 de l'enceinte extérieure 6. La position dans l'espace du plan de joint 4 de soudure des deux parties de l'enceinte extérieure 6 n'est plus limitée par la présence de la chambre 12. Le plan de joint 4 peut être, par exemple, fait suivant un plan 26 incliné par rapport au plan représenté par le fond 24 de la partie 10 inférieure de l'enceinte extérieure 6. De plus la chambre 12 peut être positionnée librement dans le réservoir, elle peut par exemple est montée par son embout 18 de sortie de liquide sur le fond 10 de l'enceinte extérieure 6, alors que son ouverture 14 de remplissage par débordement se situe au niveau du couvercle 8 de l'enceinte extérieure 6.

Etant fabriquée séparément de l'enceinte extérieure 6, la chambre 12 est amovible. Elle est importée et montée lors de l'assemblage du réservoir 2. Elle peut être montée sur une quelconque paroi verticale intérieure de l'enceinte extérieure 6. La paroi sur laquelle est montée la chambre 12 est déterminé en fonction de l'endroit où est moulé dans l'enceinte extérieure 6 l'embout 20 de sortie de liquide de l'enceinte extérieure 6 destiné à recevoir l'embout 18 de sortie de liquide de la chambre 12.

Afin d'assurer une bonne alimentation du système d'embrayage et d'éviter des fuites dans le réservoir 2, l'emboîtement de l'embout 18 de sortie de la chambre 12 dans l'embout 20 de sortie de l'enceinte extérieure 6 est réalisé de manière étanche. Cette étanchéité permet par ailleurs d'assurer l'indépendance du niveau de liquide dans la chambre 12 par rapport au niveau de liquide dans l'enceinte extérieure 6 dans le cas ou le niveau de liquide dans l'enceinte extérieure 6 est inférieur au niveau de l'ouverture 14 de remplissage de la chambre 12.

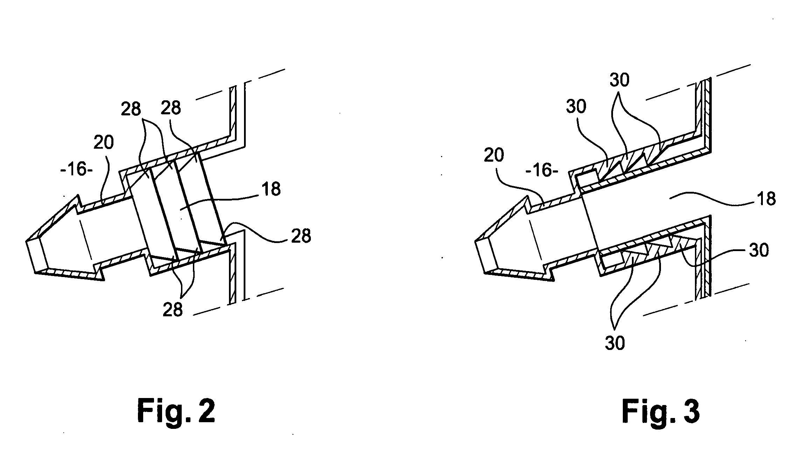

Les figures 2 et 3 représentent une vue en coupe transversale d'une sortie de liquide de frein d'un réservoir de liquide hydraulique d'embrayage et de freinage à chambre selon l'invention. Afin de mieux assurer l'étanchéité de la sortie 16 de liquide de la chambre 12, des sapins 28 externes, tel que dans la figure 2, sont réalisés sur l'embout 18 de sortie de liquide de la chambre 12. Ces sapins 28 sont des excroissances de l'embout 18 venant en contact étanche avec la paroi interne de l'embout 20. Ces sapins 28 participent à la fixation de la chambre 12 dans l'enceinte extérieure 6 en lui assurant un meilleur maintien dans le réservoir 2 lors de l'emboîtement de l'embout 18 de sortie de liquide de la chambre 12 dans l'embout 20 de sortie de liquide de l'enceinte extérieure 6.

Une variante, selon l'invention, présente des sapins 30 internes montés dans l'embout 20 de sortie de liquide de l'enceinte extérieure 6 dans lequel est emboîté l'embout 18 de sortie de liquide de la chambre 12, tel que représenté dans la figure 3. Ces sapins 30 se présentent sous la forme d'excroissances de la paroi interne de l'embout 20 et viennent en contact étanche avec l'embout 18. Ils jouent alors le même rôle de maintien que des sapins 28 externes placés sur l'embout 18 de sortie de liquide de la chambre 12. Ces sapins internes peuvent être des pièces rapportées.

Dans une autre variante de réalisation, l'embout 18 de sortie de liquide de la chambre 12 et l'embout 20 de sortie de liquide de l'enceinte extérieure 6 peuvent être emboîtés et fixés par soudure. Une soudure des embouts 18 et 20 permet d'assurer l'étanchéité de la sortie 16 de liquide de la chambre 12 ainsi qu'une solide fixation de la chambre 12 dans le réservoir 2. La soudure peut être réalisée par ultrasons ou par variation de température ou par collage ou tout autre moyen de fixation.

En plus des moyens de fixation de la chambre 12 dans le réservoir 2 déjà décrits, on peut prévoir la présence d'un pied 32 servant de cale à la chambre 12. Un tel pied 32 peut être réalisé de plusieurs façon. Une réalisation possible, par exemple, consiste à prévoir lors du moulage de la partie inférieure 10 de l'enceinte extérieure 6 la présence de ce pied 32 sous la forme d'une paroi cale 34 s'étendant du fond 24 de la partie inférieure 10 de l'enceinte extérieure 6 jusqu'à la hauteur attendue du fond 22 de la chambre 12 afin de remplir son rôle de cale.

Une variante de réalisation comporte un pied 32 pied ayant deux parties, un montant 36 et une embase 38. Le montant 36 est plan et est fixé lors du montage contre une paroi interne de l'enceinte extérieure 6. La fixation assure la stabilité du pied 32 dans le réservoir 2 et peut être réalisé par n'importe quel moyen, collage ou soudure par exemple. L'embase 38 est plane et inclinée par rapport au montant 38 de manière à ce que son extrémité 40 vienne se placer sous le fond de la chambre 22 et que le pied 32 remplisse son rôle de cale. L'embase 38 peut être moulée avec la chambre 12 alors que le montant 36 peut être moulé avec l'enceinte 6.

La fixation de la chambre 12 peut se faire par soudure d'une nervure 42 de la chambre 12 sur l'enceinte extérieure 6. Dans ce cas une nervure 42 est réalisée sur la chambre 12 lors de sa fabrication. Cette nervure 42 se situe sur la paroi où est situé l'embout 18 de sortie de liquide de la chambre 12. La nervure 42 peut s'étendre sur toute la paroi ainsi en contact de la chambre 12. La nervure 12 peut être prévue pour venir se loger dans une rainure 44 prévue à cet effet située sur la partie 46 supérieure du fond 10 de l'enceinte extérieure 6. La nervure 42 est dans ce cas de préférence soudée sur le plan de joint 4, lors de la soudure de la partie inférieure 10 et de la partie supérieure 8 de l'enceinte extérieure 6.

Afin d'assurer un niveau minimum de remplissage de la chambre 12, l'ouverture 14 peut être placée de manière à ce que le remplissage par débordement ne s'effectue que quand le liquide dans le réservoir atteint un certain niveau. Pour cela l'ouverture 14 de la chambre 12 est placée au dessous d'un niveau 48 de remplissage de l'enceinte extérieure 6. Cette précaution sert à assurer un niveau minimum de remplissage de la chambre et du réservoir pour mettre en fonction l'ensemble.

Dans les variantes de réservoir 2 proposées ci dessus, une seule chambre 12 était présente dans le réservoir 2. On peut très bien avoir un réservoir 2 contenant plusieurs chambres 12. Dans un réservoir 2 de ce type, chaque chambre 12 possède sa propre sortie 16 de liquide du réservoir 2 et est fixée dans l'enceinte extérieure 6 du réservoir 2.

Il existe de nombreux réservoir connus dans lesquels il existe deux chambres de liquide de frein pour alimenter deux circuits de freinage distinct. La chambré 12 peut être montée dans l'une de ces chambres. Une chambre peut elle même être montée dans l'autre.

## Revendications

1. Réservoir (2) de liquide hydraulique d'embrayage et de freinage comportant
- une enceinte extérieure (6) comportant un fond (10) et un couvercle (8) soudés entre eux,
- une chambre (12) contenue dans l'enceinte (6), cette chambre (12) étant ouverte dans l'enceinte, l'ouverture (14) étant faite sur le dessus de la chambre (12), la chambre (12) ayant une position fixe dans l'enceinte,
- une sortie (16) de liquide de cette chambre (12),
**caractérisé en ce que**
- la chambre (12) est fabriquée à part de l'enceinte (6) et
- est emboîtée dans l'enceinte par un embout (18) de sortie de la chambre (12) qui pénètre dans un embout (20) de sortie de liquide de l'enceinte (6) de manière étanche.

2. Réservoir (2) selon la revendication 1, **caractérisé en ce que**
- la chambre (12) est amovible.

3. Réservoir (2) selon l'une des revendications 1 à 2, **caractérisé en ce que** la chambre (12) est montée sur une paroi intérieure verticale de l'enceinte (6).

4. Réservoir (2) selon l'une des revendications 1 à 3, **caractérisé en ce que** l'embout (18) de sortie de liquide de la chambre (12) comporte des sapins (28) externes.

5. Réservoir (2) selon l'une des revendications 1 à 4, **caractérisé en ce que** l'embout (18) de sortie de liquide de la chambre (12) est fixé dans l'embout (20) de sortie de liquide de l'enceinte (6) par soudure.

6. Réservoir (2) selon l'une des revendications 1 à 5, **caractérisé en ce que** la chambre (12) est maintenue fixe dans l'enceinte (6) à l'aide d'une cale (32) qui repose sur le fond de l'enceinte.

7. Réservoir (2) selon l'une des revendications 1 à 6, **caractérisé en ce que** la chambre (12) est maintenue dans l'enceinte (6) à l'aide d'une nervure (42) située sur la partie supérieure de la chambre, cette nervure étant de préférence soudée sur le plan (4) de joint formé par le soudage du fond (10) et du couvercle (8) de l'enceinte (6).

8. Réservoir selon l'une des revendications 1 à 7, **caractérisé en que** l'ouverture de la chambre est située au dessous d'un niveau de remplissage de l'enceinte.

9. Réservoir selon l'une des revendications 1 à 8, **caractérisé en ce qu'**il comporte plusieurs chambres dans la même enceinte avec des embouts de sortie de chambre pénétrant dans des embouts de sortie de l'enceinte.

10. Réservoir selon l'une des revendications 1 à 9, **caractérisé en ce que** la chambre (12) est fixée au couvercle (8) de l'enceinte extérieure (6).

## Claims

1. Hydraulic clutch and brake fluid reservoir (2) comprising
- an outer enclosure (6) comprising a bottom (10) and a cover (8) which are welded together,
- a chamber (12) contained in the enclosure (6), this chamber (12) being open in the enclosure, the opening (14) being formed on the top of the chamber (12), the chamber (12) having a fixed position in the enclosure,
- a fluid outlet (16) of this chamber (12), **characterized in that**
- the chamber (12) is manufactured apart from the enclosure (6) and
- is fitted into the enclosure by an outlet end piece (18) of the chamber (12) which penetrates into a fluid outlet end piece (20) of the enclosure (6) in a sealed manner.

2. Reservoir (2) according to Claim 1, **characterized in that**
- the chamber (12) is removable.

3. Reservoir (2) according to either of Claims 1 and 2, **characterized in that** the chamber (12) is mounted on a vertical inner wall of the enclosure (6).

4. Reservoir (2) according to one of Claims 1 to 3, **characterized in that** the fluid outlet end piece (18) of the chamber (12) comprises outer fir tree connectors (28).

5. Reservoir (2) according to one of Claims 1 to 4, **characterized in that** the fluid outlet end piece (18) of the chamber (12) is fastened in the fluid outlet end piece (20) of the enclosure (6) by welding.

6. Reservoir (2) according to one of Claims 1 to 5, **characterized in that** the chamber (12) is held fixed in the enclosure (6) by means of a wedge (32) which rests on the bottom of the enclosure.

7. Reservoir (2) according to one of Claims 1 to 6, **characterized in that** the chamber (12) is maintained in the enclosure (6) by means of a rib (42) situated on the upper part of the chamber, this rib preferably being welded on the parting line (4) formed by the welding of the bottom (10) and of the cover (8) of the enclosure (6).

8. Reservoir according to one of Claims 1 to 7, **characterized in that** the opening of the chamber is situated below a filling level of the enclosure.

9. Reservoir according to one of Claims 1 to 8, **characterized in that** it comprises a plurality of chambers in the same enclosure with chamber outlet end pieces penetrating into outlet end pieces of the enclosure.

10. Reservoir according to one of Claims 1 to 9, **characterized in that** the chamber (12) is fastened to the cover (8) of the outer enclosure (6).

## Patentansprüche

1. Behälter (2) für hydraulische Kupplungs- und Bremsflüssigkeit, mit
- einem äußeren Raum (6) mit einem Boden (10) und einem Deckel (8), die miteinander verschweißt sind,
- einer in dem Raum (6) enthaltenen Kammer (12), wobei diese Kammer (12) im Raum offen ist, die Öffnung (14) an der Oberseite der Kammer (12) ausgebildet ist und die Kammer (12) eine feststehende Stellung im Raum hat,
- einem Flüssigkeitsaustritt (16) dieser Kammer (12),
**dadurch gekennzeichnet, dass**
- die Kammer (12) getrennt von dem Raum (6) hergestellt ist und
- über ein Austrittsendstück (18) der Kammer (12), das in dichter Weise in ein Flüssigkeitsaustrittsendstück (20) des Raums (6) dringt, in den Raum eingesetzt ist.

2. Behälter (2) nach Anspruch 1, **dadurch gekennzeichnet, dass**
- die Kammer (12) herausnehmbar ist.

3. Behälter (2) nach Anspruch 1 oder 2, **dadurch gekennzeichnet, dass** die Kammer (12) an einer senkrechten Innenwand des Raums (6) angebracht ist.

4. Behälter (2) nach einem der Ansprüche 1 bis 3, **dadurch gekennzeichnet, dass** das Flüssigkeitsaustrittsendstück (18) der Kammer (12) tannenförmige Außenvorsprünge (28) aufweist.

5. Behälter (2) nach einem der Ansprüche 1 bis 4, **dadurch gekennzeichnet, dass** das Flüssigkeitsaustrittsendstück (18) der Kammer (12) durch Schweißen in dem Flüssigkeitsaustrittsendstück (20) des Raums (6) befestigt ist.

6. Behälter (2) nach einem der Ansprüche 1 bis 5, **dadurch gekennzeichnet, dass** die Kammer (12) mit einem Keil (32), der am Boden des Raums aufliegt, feststehend in dem Raum (6) gehalten ist.

7. Behälter (2) nach einem der Ansprüche 1 bis 6, **dadurch gekennzeichnet, dass** die Kammer (12) mittels einer Rippe (42), die sich am oberen Abschnitt der Kammer befindet, im Raum (6) gehalten ist, wobei diese Rippe vorzugsweise an der Verbindungsebene (4), die durch das Verschweißen des Bodens (10) mit dem Deckel (8) des Raums (6) gebildet ist, geschweißt ist.

8. Behälter nach einem der Ansprüche 1 bis 7, **dadurch gekennzeichnet, dass** die Öffnung der Kammer über einem Füllstand des Raums liegt.

9. Behälter nach einem der Ansprüche 1 bis 8, **dadurch gekennzeichnet, dass** er in ein und demselben Raum mehrere Kammern mit Kammeraustrittsendstücken aufweist, die in Austrittsendstücke des Raums dringen.

10. Behälter nach einem der Ansprüche 1 bis 9, **dadurch gekennzeichnet, dass** die Kammer (12) am Deckel (8) des äußeren Raums (6) befestigt ist.
